# EUROPEAN PATENT APPLICATION

(11) **EP 4 248 812 A2**
(43) Date of publication of application: **27.09.2023**
(21) Application number: 23159520.8
(22) Date of filing: 01.03.2023
(51) Int. Cl.: A47J 43/046, A47J 43/07

(54) **CORDLESS FOOD PROCESSOR**

(30) Priority: 01.03.2022 US 202263315338 P; 19.09.2022 US 202263407820 P; 27.02.2023 US 202318114541
(71) Applicant: Whirlpool Corporation, Benton Harbor, MI 49022 (US)
(72) Inventor: Aditjandra, Antonius K., 21024 Cassinetta di Biandronno (VA) (IT); Arnold, Richard D., 21024 Cassinetta di Biandronno (VA) (IT); Howse, Lynsey A., 21024 Cassinetta di Biandronno (VA) (IT); Kasner, Rebecca K., 21024 Cassinetta di Biandronno (VA) (IT); Kempic, Joy Kathleen, 21024 Cassinetta di Biandronno (VA) (IT); Mock, Brandon Tyler, 21024 Cassinetta di Biandronno (VA) (IT); Myers, John Jay, 21024 Cassinetta di Biandronno (VA) (IT); Schutte, Nicholas Hill, 21024 Cassinetta di Biandronno (VA) (IT); Wang, Yifan, 21024 Cassinetta di Biandronno (VA) (IT); Wilson, Rex, 21024 Cassinetta di Biandronno (VA) (IT)
(74) Representative: Spina, Alessandro

(57) **Abstract**

A food processor (10) includes a base unit (12) including a housing (14) enclosing a drive motor (16). The housing (14) defines a battery-receiving cavity (18) along a portion thereof with a plurality of terminals (19)exposed therein. The food processor (10) further includes a jar assembly (20) mountable on the base unit (12) and enclosing a food-processing cavity (22) , a food processing implement (24) rotatably mounted within the jar assembly (20) and configured to be driven by the motor (16) when the jar assembly (20) is mounted on the base (12), and a battery (26) mountable in the battery receiving cavity (18) in electrical connection with the plurality of terminals (19). The base unit (12) is configured to operably power the drive motor (16) using the battery (26).

## Description

### BACKGROUND OF THE DISCLOSURE

The present disclosure generally relates to improvements to a food processor, and more specifically, to a battery powered food processor with performance improvements.

### SUMMARY OF THE DISCLOSURE

According to one aspect of the present disclosure, a food processor includes a base unit including a housing enclosing a drive motor. The housing defines a battery-receiving cavity along a portion thereof with a plurality of terminals exposed therein. The food processor further includes a jar assembly mountable on the base unit and enclosing a food-processing cavity, a food processing implement rotatably mounted within the jar assembly and configured to be driven by the motor when the jar assembly is mounted on the base, and a battery mountable in the battery receiving cavity in electrical connection with the plurality of terminals. The base unit is configured to operably power the drive motor using the battery.

According to another aspect of the present disclosure, a food processor includes a base unit having a housing enclosing a drive motor. The housing defines an upper surface with a drive connection of the base unit mounted on the upper surface and connected with the motor through the housing and a collar extending upwardly from the upper surface and surrounding the drive connection. The food processor further includes a jar assembly mountable on the base unit and enclosing a food-processing cavity. The jar assembly is mountable on the base by receipt of a lower edge thereof within the collar. A food processing implement is rotatably mounted within the jar assembly and configured to be driven by the motor when the jar assembly is mounted on the base.

According to another aspect of the present disclosure, a food processor includes a base unit with a housing enclosing a drive motor and a jar assembly mountable on the base unit and enclosing a food-processing cavity. The jar assembly includes a jar housing having a handle on a first side thereof and an interlock channel defined on a second side of the jar housing opposite the first side of the jar housing. The food processor further includes a food processing implement rotatably mounted within the jar assembly and configured to be driven by the motor when the jar assembly is mounted on the base.

These and other features, advantages, and objects of the present disclosure will be further understood and appreciated by those skilled in the art by reference to the following specification, claims, and appended drawings.

### BRIEF DESCRIPTION OF THE DRAWINGS

In the drawings:
FIG. 1 is a front perspective view of a food processor according to an aspect of the disclosure;
FIG. 2 is a back perspective view of the food processor of FIG. 1;
FIG. 3 is a perspective view of the food processor with a battery in a removed position therefrom;
FIG. 4 is an assembly view of a jar assembly and a base unit of the food processor;
FIG. 5 is an assembly view of a processing implement in association with the food processor having the jar assembly thereof configured with an open lid;
FIG. 6 is an assembly view of various processing implements with an adaptor unit useable within the jar assembly;
FIG. 7 is a top view of a blade unit implementation of one of the processing implements;
FIG. 8 is a top combination slicing and shredding implementation of one of the processing implements;
FIG. 9 is an assembly view of first and second pushers with a chute of the lid of the food processor;
FIG. 10 is a bottom perspective view of a portion of the food processor;
FIG. 11 is a side cross-section view of the food processor;
FIG. 12 is a front perspective view of an alternative food processor according to a further aspect of the disclosure;
FIG. 13 is a back perspective view of the food processor of FIG. 12;
FIG. 14 is an assembly view of a processing implement useable within a jar assembly of the food processor;
FIG. 15 is a side cross-section view of the food processor;
FIG. 16 is a bottom perspective view of a portion of the food processor;
FIG. 17 is a bottom perspective view of a portion of the food processor according to an alternative variation;
FIG. 18 is a front perspective view of a further alternative food processor according to another aspect of the disclosure;
FIG. 19 is an exploded view of the food processor of FIG. 18 showing a battery attachment arrangement thereof; and
FIG. 20 is a bottom perspective view of the food processor of FIG. 18.

The components in the figures are not necessarily to scale, emphasis instead being placed upon illustrating the principles described herein.

### DETAILED DESCRIPTION

The present illustrated embodiments reside primarily in combinations of method steps and apparatus components related to a food processor appliance. Accordingly, the apparatus components and method steps have been represented, where appropriate, by conventional symbols in the drawings, showing only those specific details that are pertinent to understanding the embodiments of the present disclosure so as not to obscure the disclosure with details that will be readily apparent to those of ordinary skill in the art having the benefit of the description herein. Further, like numerals in the description and drawings represent like elements.

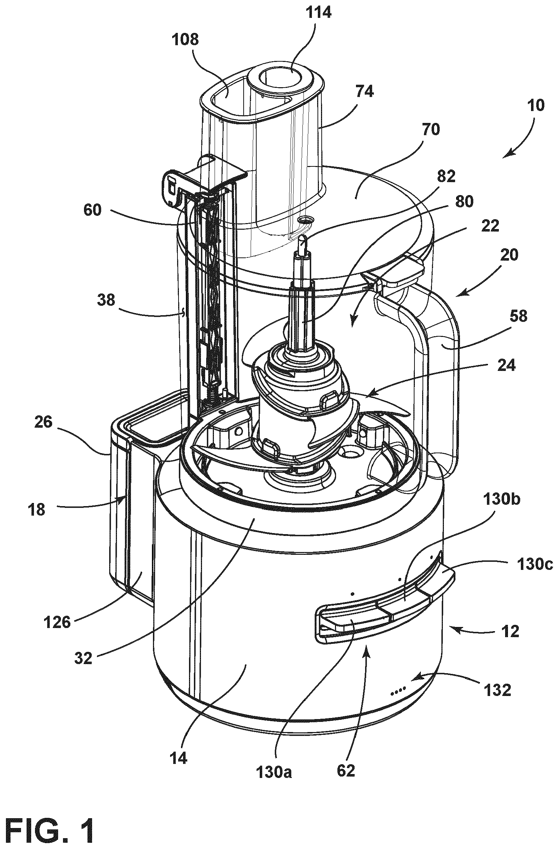

For purposes of description herein, the terms "upper," "lower," "right," "left," "rear," "front," "vertical," "horizontal," and derivatives thereof shall relate to the disclosure as oriented in FIG. 1. Unless stated otherwise, the term "front" shall referto the surface of the element closer to an intended viewer, and the term "rear" shall refer to the surface of the element further from the intended viewer. However, it is to be understood that the disclosure may assume various alternative orientations, except where expressly specified to the contrary. It is also to be understood that the specific devices and processes illustrated in the attached drawings, and described in the following specification are simply exemplary embodiments of the inventive concepts defined in the appended claims. Hence, specific dimensions and other physical characteristics relating to the embodiments disclosed herein are not to be considered as limiting, unless the claims expressly state otherwise.

The terms "including," "comprises," "comprising," or any other variation thereof, are intended to cover a non-exclusive inclusion, such that a process, method, article, or apparatus that comprises a list of elements does not include only those elements but may include other elements not expressly listed or inherent to such process, method, article, or apparatus. An element preceded by "comprises a ... " does not, without more constraints, preclude the existence of additional identical elements in the process, method, article, or apparatus that comprises the element.

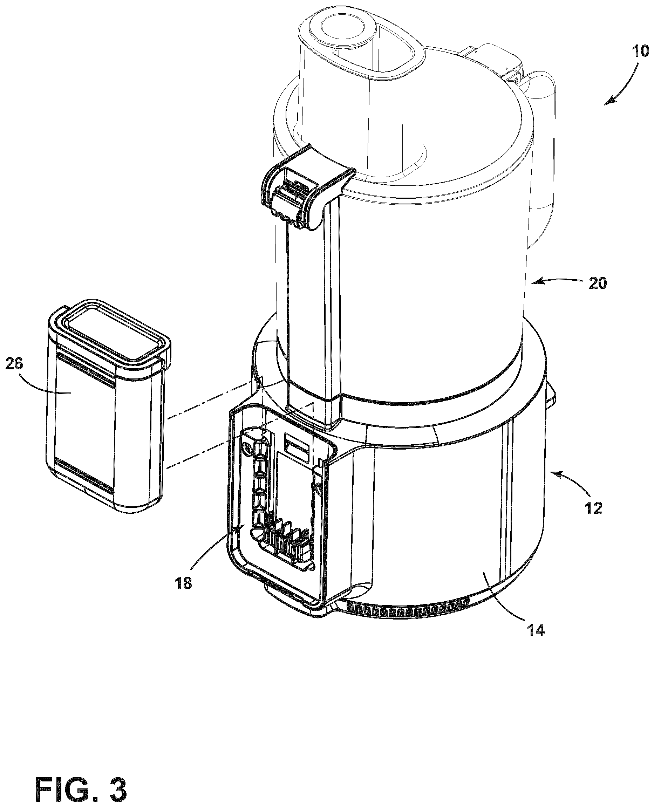

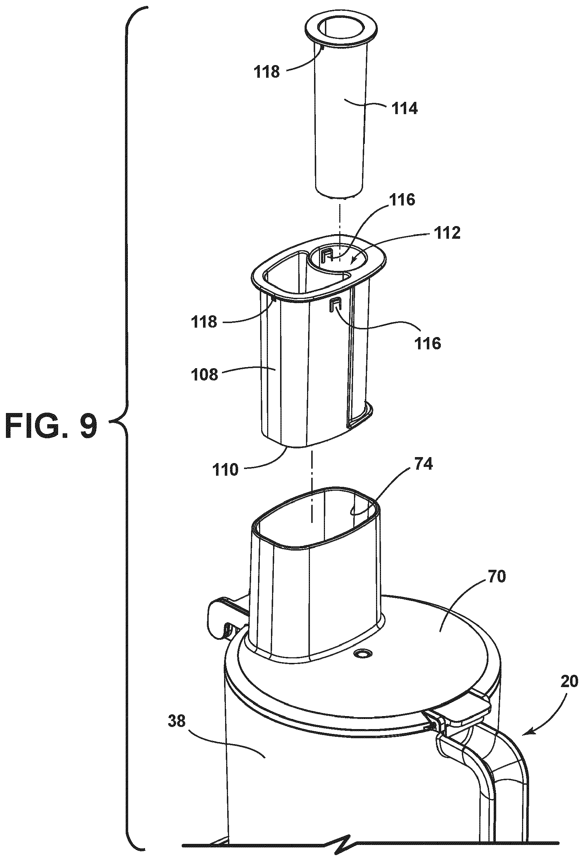

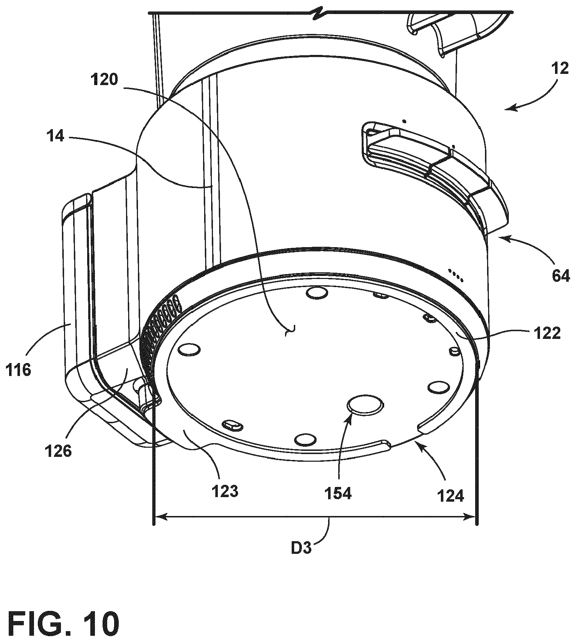

Referring to FIGS. 1-10, reference numeral 10 generally designates a food processor. Food processor 10 includes a base unit 12 including a housing 14 enclosing a drive motor 16 (FIG. 10). The housing 14 defines a battery-receiving cavity 18 along a portion thereof with a plurality of terminals 19 (FIG. 3) exposed therein. The food processor 10 further includes a jar assembly 20 mountable on the base unit 12 and enclosing a food-processing cavity 22, a food processing implement 24 rotatably mounted within the jar assembly 20 and configured to be driven by the drive motor 16 when the jar assembly 20 is mounted on the base unit 12, and a battery 26 mountable in the battery receiving cavity 18 in electrical connection with the plurality of terminals 19. The base unit 12 is configured to operably power the drive motor 16 using the battery 26.

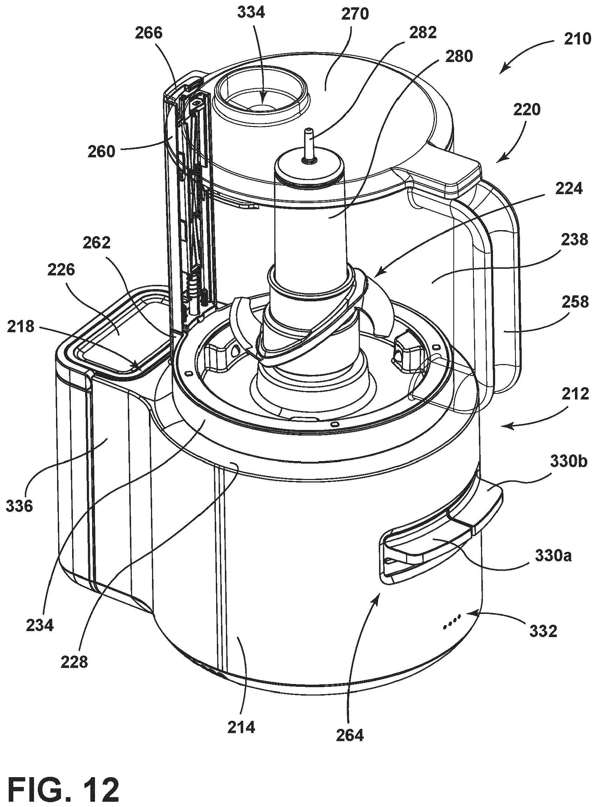

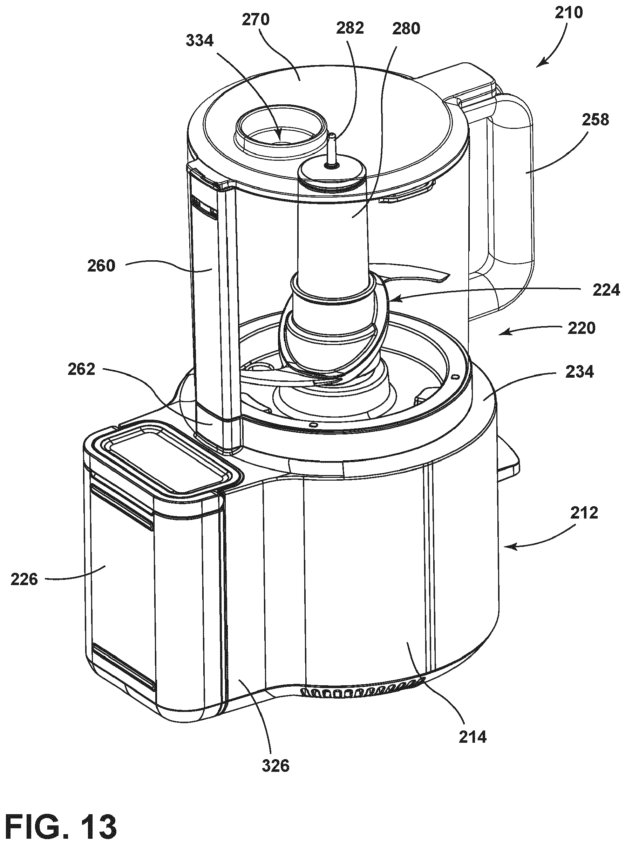

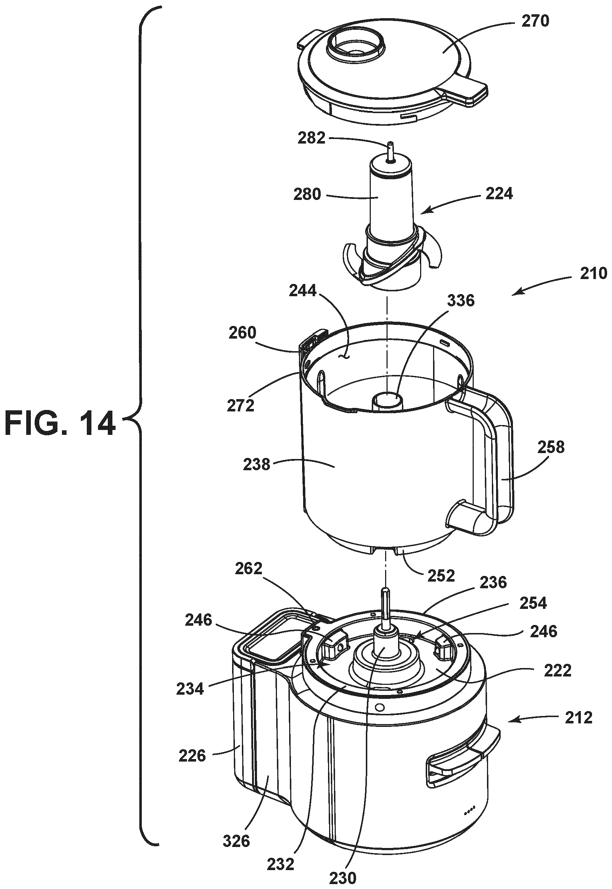

As can be appreciated, the use of the battery 26 to power the drive motor 16 is such that the battery-powered food processor 10 described herein is operable without having to plug the food processor 10 into an external power source (such as a wall outlet or the like) and results in the disclosed food processor 10 being characterized as "cordless". In this manner, the food processor 10 can be placed and operated in any convenient location along the counter space provided within the kitchen, regardless of the proximity of such location to a power outlet or an available power outlet. As shown in FIG. 3, the battery 26 is removably coupled with the housing 14 of the base 12 within the depicted battery-receiving cavity 18 such that a selected battery 26 of, potentially, a number of available compatible batteries 16 can be selected and attached with the food processor 10 for powering the operation thereof by way of the electrical connection facilitated by connection of terminals of the battery 26 with the terminals 19 of the food processor 10 that are exposed within the battery-receiving cavity 26. In this manner, the battery 26 can be removed from the food processor 10 for use with another compatible kitchen appliance (such as a hand mixer, a hand blender, a countertop blender, or another food processor like the mini-processors/choppers shown in FIGS. 12-19 herein and discussed further below) or to be replaced with a charged battery 26, such as when the current battery 26 has become depleted. In this manner, a depleted battery can be charged using a compatible charger having mechanical components similar to the battery receiving cavity 26 and terminals 19 shown in connection with the present food processor 10. An example of such a charger is described in the co-pending, commonly-assigned U.S. Provisional Patent Application filed contemporaneously herewith under the attorney docket number SUB-15280F-US-PSP[2], the entire contents of which are incorporated by reference herein.

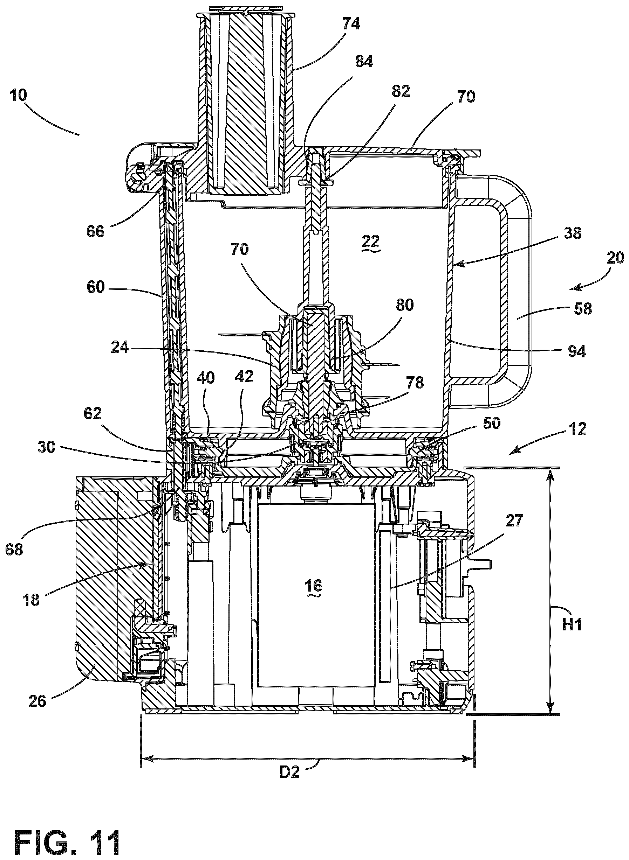

The battery 26 and the corresponding electronic circuitry 27 (FIG. 11) for controlling the operation of the food processor 10, including the operation of drive motor 16 can be configured according to an architecture using a voltage in the range of about 18-20 V and in one implementation 20 V, with it being understood that the actual voltage supplied and utilized may vary within a range around the described desired operating voltage according to factors generally understood in the art. In this manner, the battery 26 can be a five-cell 20 V battery, although other configurations are possible. In general, such a voltage may be sufficient for operation of the food processor 10 including operation of the motor 16, which is generally understood to be a direct-current (DC) motor and in one aspect a brushless DC motor, at an acceptable torque for typically-accepted use as a food processor within an acceptable operating speed. Additional aspects of the electronic, battery-powered operation of the food processor 10 are described further below.

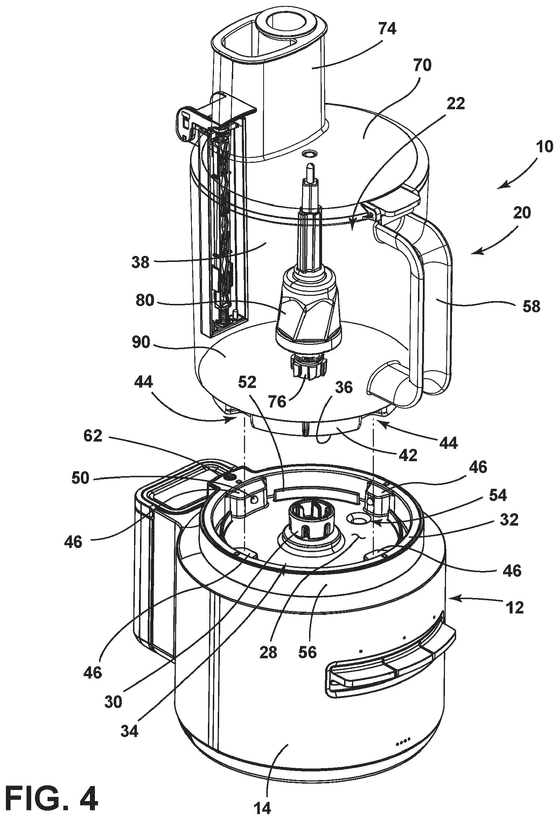

With reference to FIGS. 4-9, certain features of the disclosed food processor 10 may add to the useability or general performance of the appliance in ways not necessarily dependent on the use of the above-described battery 26 to exhibit such effect. In one aspect, the food processor 10 may include a drop-in interface between the jar assembly 20 and the base unit 12. In particular, the housing 14 of the base unit 12 defines an upper surface 28 with a drive connection 30 of the base unit 12 mounted on the upper surface 28 and connected with the drive motor 16 through the housing 14. A collar 32 can be formed with or otherwise attached with the upper surface 28 of the housing 14 so as to extend upwardly from the upper surface 28 and to surround the drive connection 30. In this manner, the collar 28 can define an upper cavity 32 of the base unit 12, within which the drive connection 30 is positioned. As shown in FIG. 4, the jar assembly 20 is mountable on the base unit 12 by receipt of a lower edge 36 thereof within the upper cavity 32 defined by the collar 32. More particularly, the jar assembly 20 can include a jar housing 38 that includes the food product receiving cavity 18, including a lower wall 40 included in the jar housing 38. The lower edge 36 of the jar assembly 20 can be defined on a lower flange 42 of the jar assembly 20 that extends downwardly from the lower wall 40. In one aspect, the flange 42 can be inset relative a side wall 44 of the jar housing 38 that extends upward from the lower wall 42 to further define the food product receiving cavity 22. In this arrangement, the flange 42, which may be generally circular in shape, can fit within the collar 32 in a generally close contact therewith so that the jar housing 38 is generally located relative to the base housing 14 with the lower edge 36 resting on the upper surface 28.

As further shown, the collar 32 defines a plurality of alignment tabs 46 extending inwardly toward the drive connection 30 along the upper surface 28 of the housing 14. The jar housing 38 can, accordingly, define a plurality of notches 48 corresponding with respective ones of the plurality of alignment tabs 46 for receipt thereof into the notches 48 when the jar assembly 20 is mounted on the base unit 12, as described above. This arrangement helps to prevent rotation of the jar assembly 20 relative to the base unit 12, including under torque of the motor 16, delivered by the drive connection 30, as discussed further below. At least one of the alignment tabs 46 can include a spring-biased ball 50 that can engage with a corresponding detent in the aligned notch 48 to provide a snap fit between the jar assembly 20 and the base unit 12, which may particularly add a retention force to such fit. Additionally, the upper surface 28 of the housing 14 can define a plurality of alignment flanges 52 to help in the positioning of the jar assembly 20 relative to the base unit 12. To prevent the inadvertent build up or retention of fluid within cavity 34, the base unit 12 can define a drain hole 54 therethrough, that can have a hollow, tube-like interior defined by the housing 14. In this manner, fluid within the cavity 34 can pass through the drain hole 54 to be deposited on the counter top on which the food processor 10 is resting. A decorative trim band 56 can be applied on an exterior of the collar 32, including as an in-mold feature applied by a hot-foil stamping process for transfer to the housing 14 during fabrication thereof. As shown, the collar 32 can be inset relative to the outer edge of the upper surface 28 to, in one aspect, allow for the desired fitting of the jar assembly 20 to the base unit 12, while facilitating a base 12 arrangement with a generally wider footprint, as discussed further below.

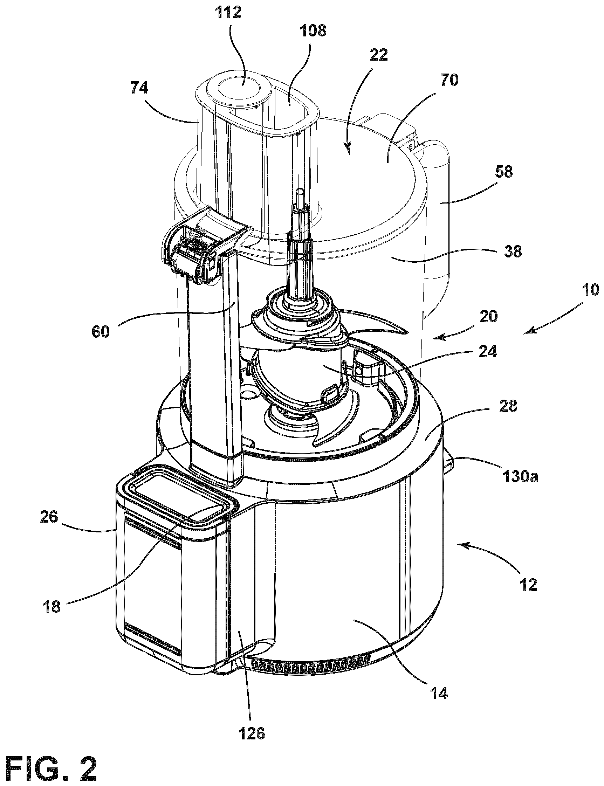

As can be seen in FIGS. 1 and 2, the jar assembly 20 includes the above-mentioned jar housing 38, which has a handle 58 on a first side of the jar housing 38 and an interlock channel 60 on a second side of the jar housing 38 opposite the first side of the jar housing 38. As is generally understood, the interlock channel 60 is part of an interlock mechanism that prevents operation of the food processor 10 if the jar assembly 20 is not present or not properly positioned on the base unit 12 and/or if other operating requirements are not met. In this manner, the interlock channel 60 is intended to align with a corresponding feature 62 on the base unit 12. As presently shown, the interlock feature 62 of the base unit 12 is positioned on what would be generally understood as the back side of the base unit 12 (at least by being positioned opposite from the user-interface 64 portion of the base unit 12, which generally signals the front of the food processor 10). In this manner, it is understood that proper alignment of the jar assembly 20 with the base unit 12 is such that the interlock channel 60 is positioned on the back side of the base unit 12 (i.e., disposed toward the battery 26) and the handle is positioned on the front side of the base unit 12 (i.e., disposed toward the user interface 64). Typical food processors integrate any interlock mechanisms with the handle such that the interlock mechanism is oriented toward the front of such a food processor, which may obstruct a user's view of the food processing cavity. Presently, by locating the interlock channel 60 on the back of the jar assembly 20, the user has a more direct view of the food processing cavity through the clearjar housing 38.

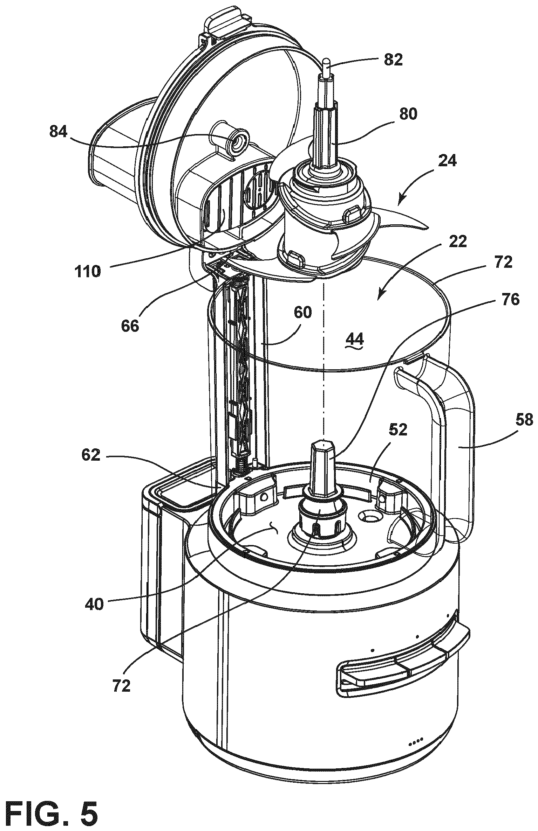

With additional reference to FIG. 5, the jar assembly 20 further includes an interlock member 66 that is movably mounted in the interlock channel 60 (which may be open on the outside of the jar housing 38 and enclosed by a trim piece or the like) so as to be moveable into and out of engagement with a lockout mechanism 68 in the base unit 12 on an underside of the lockout feature 62. As can be appreciated, the lockout mechanism 68 (FIG. 11) can be configured to disable the motor 16 and/or other functionality of the food processor 10 if it is not engaged. Once engaged, such as by the interlock member 66 passing through the interlock feature 62 and into contact with a portion of the lockout mechanism, the motor 16 is made operable. In the present arrangement, the jar assembly 20 includes a lid 70 that is hingedly connected to the jar housing 38 so as to be positionable in an open position (FIG. 5) and a closed position (FIG. 1) over an open end 72 of the jar housing 38. The lid 70 operably engages an upper end 66a of the interlock member 66 that extends upwardly out of the interlock channel 60 in a spring-biased manner in alignment with a portion of the lid 70. When the lid is moved into the closed position, the lid contacts the upper end 66a of the interlock member 66 to force it downward to engage the lockout mechanism 68. In this manner, when the lid 70 is opened, the interlock member 66 disengages from the lockout mechanism 68. In this manner, the jar assembly 20 must be installed on the base unit 12 with the lid 70 in the closed position to operate the motor 16. The above-noted drop-in arrangement between the jar assembly 20 and the base unit 12 facilitates assembly of the jar assembly 20 onto the base unit 12 with the lid 70 in the closed position. It is further noted that the hinged connection between the lid 70 and the jar housing 38 can be such that the lid 70 can be removed when in the open position to allow additional access to the opening 72 and/or replacement with a "refrigerator lid" that lacks a chute 74 of the depicted lid 70, which is discussed further below.

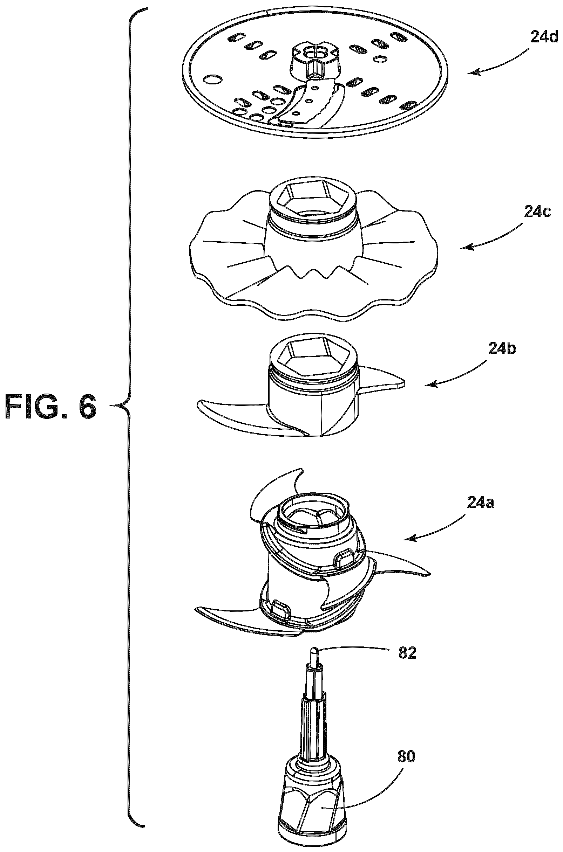

With continued reference to FIG. 5 (and additional reference to FIG. 11), the above-described lower wall 40 of the jar housing 38 can include a coupling 76 that is sealingly received in a central opening 78 through the lower wall 40 and engageable with the drive connection 30 of the base unit 12 when the jar assembly 20 is in place on the base unit 12. In this manner, the coupling can transfer the rotational motion of the drive connection 30 (which is effected by the drive motor 16) to the food processing cavity for use in rotating the food processing implement 24, as discussed further below. In this manner, the jar assembly 20 is a fully-sealed construction. As shown in FIGS. 5 and 6, the food processing implement 24 is mountable on an adapter unit 80 that is operably connected with the coupling 76 (such as by a sliding engagement that rotationally couples the adapter unit 80 with the coupling 76). As shown in FIG. 11, the adapter unit 80 includes a drive shaft 82 extending upwardly away from the interface with the coupling 76. The drive shaft 82 can support certain variations of the processing implement 24 that are suitably positioned away from the lower wall 40 and toward the lid 70, as discussed further below. Further, the drive shaft 82 can rotatably engage with a receptacle 84 in the lid 70 to stabilize the adaptor unit 82 and the drive shaft 82, particularly for use of the aforementioned variations of the processing implement.

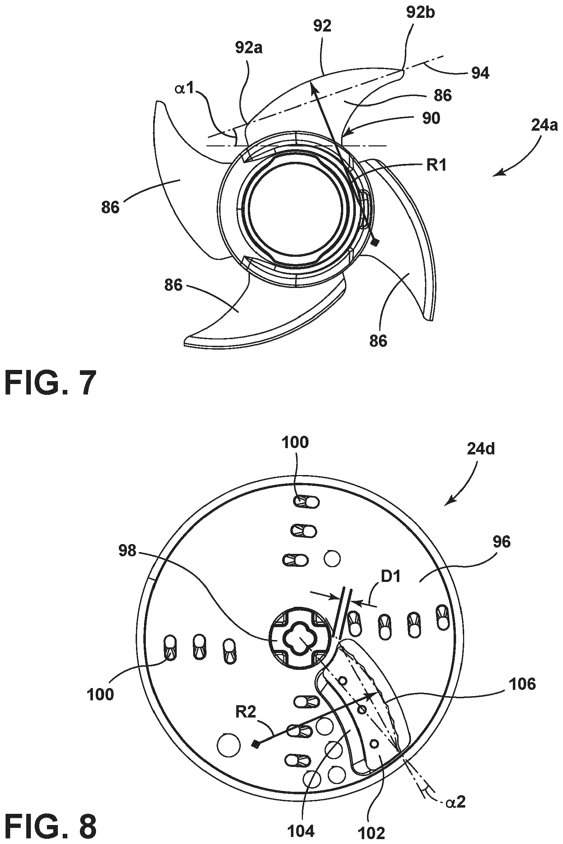

As shown in FIG. 6, the adapter unit 80 can be configured to receive a number of different variations of the above-mentioned food processing implement 24 that can be provided with the food processor 10 and/or made available as aftermarket accessories. As shown, the implements 24 can include a blade unit 24a, a dough blade 24b, an egg whipper 24c and a combination slicing-shredding disc 24d, among other known variations of such implements. The blade unit 24a, shown in further detail in FIG. 7, includes four blades 86 rigidly coupled with a hub 88 at radially spaced-apart locations therearound (e.g., at 90° intervals). The hub is mountable on the adapter unit such that rotation of the coupling 76 causes rotation of the blades 86 within the food processing cavity 22. Each of the blades 86 defines a base 90 that extends along the hub 88 and a sharpened edge 92 having a proximal end 92a positioned within about 10 mm from the base 90 and extending to a distal end 92b along an axis 94 positioned at an angle α1 of about 19° with respect to the base 90. The sharpened edge 92 is configured in an arcuate manner so as to extend along a radius R1 between the proximal 92a and distal ends 92b, with the radius R1 being about (e.g., +/- 10%) 68 mm and defining an arc length of about (e.g., +/- 10%) 67 mm. The blades 86 can be mounted at successive heights along the hub 88 such that, for example, the bottom blade 86a is about (e.g., +/- 10%) 2.85 mm above the lower wall 40 and the upper blade 86d is about (e.g., +/- 10%) 55.75 mm above the lower wall 40. The middle blades 86b and 86c can be evenly spaced between the upper 86d and lower 86a blades.

As additionally shown in FIG. 8, the combination shredding-slicing disc 24d can have a body 96 with a hub 98 configured for a press-fit engagement with the drive shaft 88 of the adapter unit 80 so as to be positioned adjacent the lid (e.g., at a distance of between about 8 mm and 10 mm therefrom). In addition to a plurality of grating/shredding features 100, the combination disc 24d includes slicing blade 102 positioned over an opening 104 through the body 96. The slicing blade 102 has a sharpened edge 106 with a proximal end 106a positioned at a distance D1 of about (e.g., +/- 10%) 3.75 mm of the hub 98 and extending to a distal end 106b along an axis 108 positioned at an angle α2 of about 12° with respect to a radius R2 of the body 96 extending through the distal end 106b. The sharpened edge 106 can be scalloped and/or serrated, but can generally extend along a radius R3 between the proximal 106a and distal ends 106b of about 60 mm. In certain respects, the distance D1 disclosed herein can be increased relative to existing variations of such an implement 24d to reduce the likelihood that food becomes trapped between the proximal end 106a of the slicing blade 102 and the hub 98. Additionally, the angle α2 of the slicing blade 102 can impart a swept-back arrangement that may improve cutting performance.

Referring to FIG. 8, the above-described food chute 74 formed with and generally extending upwardly from the lid 70 can be configured for the introduction of food product to the food-processing cavity with the lid 70 closed (and, optionally, with the motor 16 in operation). The chute 74 can slidably receive a first pusher 108 configured for close receipt in the food chute 74. The first pusher 108 can include a proximal surface 110 that can be used to urge food product into the food processing cavity 22, including into contact with the installed food processing implement 24 (e.g., the combination disc 24d) and/or to at least partially enclose the opening from the lid 70 into the chute 74. The first pusher 108 can further define a secondary chute 112 therethrough that can receive a second pusher 114 that is smaller than the first pusher 108. In this manner, the full chute 74 can be used for the introduction of large items to the food processing cavity 22. The first pusher 108 can be used with the second pusher 114 in place within the secondary chute 112 to urge food items into/through the chute 74 and/or to enclose the chute 74 opening. Similarly, for the introduction of small/narrow food items, the first pusher 108 can be inserted into the chute 74 without the second pusher 114 in place such that the second pusher 114 can be used to urge items through the secondary chute 112. As can be appreciated, the food processor 10 may often be used with both the first pusher 108 and the second pusher 114 in place within the chute 74, including when the lid 70 is opened (to introduce large or bulk items, including with the motor 16 off). In this manner, the first pusher 108 can be adapted to retain itself within the chute 74 and to further retain the second pusher 114 within the secondary chute 112 when the lid 70 is opened or otherwise removed from the jar housing 38. As shown, the first pusher 108 can include a first tab 116a cut into the geometry thereof, for example, and configured for exerting a first retention force on an interior of the food chute 74 when the first pusher 108 is received in the food chute 74. The first pusher 108 can further include a second tab 116b cut into the geometry thereof and extending into a portion of the secondary chute (i.e., both tabs can be outwardly-biased or include a flange on an operative end thereof to effect a frictional contact with the corresponding features). The second tab 116b can exert a second retention force on the second pusher 114. This arrangement helps secure the first and second pushers 108 and 114 in place with respect to the chute 74, as discussed above. To maintain the desired, generally central positioning of the first pusher 108 with respect to the chute 74 and the second pusher 114 with respect to the secondary chute 112, the first and second pushers 108 and 114 can include centering ribs 118 at desired locations therearound to guide the features to their desired positions during assembly.

With continued reference to FIG. 11, the housing 14 of the base unit 12 can be configured to improve the stability and balancing of the food processor 10 in general (particularly when used in connection with heavy food products, such as when mixing dough or the like). In one aspect, this can be achieved by lowering the center of mass of both the base unit 12 and of the food processor 10 overall, while increasing the width of the base unit 12. In one implementation, the housing 14 can have a height H1 of about 140 mm between the upper surface 28 and the bottom surface 120 thereof. Additionally, the housing 14 can have a diameter D2 of about 180 mm. As shown in FIG. 10, the housing 14 can include an annular foot pad 122 coupled on a bottom side 120 of the housing 14. The annular foot pad 122 can generally encircle the bottom side 120 to provide a resting arrangement that is consistently at a generally widest position (e.g., avoiding narrower effective base size between corner feet or the like). The foot pad 122 can be overmolded (e.g., of thermoplastic elastomer, silicone, or the like) onto the bottom side 120 of the housing 14 and can have a diameter D3 of about (e.g., +/- 10%) 170 mm. A gap 124 can be defined in the foot pad 122 to allow any liquid flowing through the drain hole 54 to flow outwardly from beneath the base unit 12. Additionally, the housing 14 of the base unit 12 defines a projection 126 extending outwardly from the side wall 128 of the housing 14, the battery receiving cavity 18 being defined within the projection 126. The annular foot pad 122 can further define a tab 123 extending on a lower side of the projection 126 to maintain stability of the food processor 10, including when the battery 26 is pressed into place within the cavity 18.

In one aspect, the above-referenced control circuitry 27 can include a controller in the form of a microprocessor or the like that can include programming to operate the food processor 10, including based on user inputs received through the interface 64 discussed above. In various aspects, the programming can include either firmware or software that is specifically adapted to operate the motor 16 via the current received from the battery 26. In one example, the programming can be adapted to maintain an acceptably low temperature of the battery 26 and/or the motor 16 in a proactive manner based on the current drawn by the motor 16. In the illustrated example of the food processor 10, three buttons 130a, 130b, and 130c are present that operate the motor 16 at different speeds (e.g., high, medium, and low). As can be appreciated, the operation of the motor 16 at these varying speeds will result in correspondingly varying current draws. In one example, low speed operation may result in a current draw of about 15 amps, with mid-speed operation having a current draw of 20 amps, and high speed operation drawing a current of 40 amps. In this manner, operation of the motor 16 at the high speed setting will result in faster heating of the motor 16 and/or the battery 26 such that a timer can be implemented that only allows operation at a speed drawing 40 amps for a certain amount of time to prevent excessive heating. In this manner, the controller programming can be such that, when the user presses and holds button 130c, the motor 16 is operated at the full high speed for a predetermined interval (e.g., about 20 seconds, or in some examples about 10 seconds) before the speed is reduced (e.g., by between about 5% and 10% to reduce the heating effect of such operation, while still operating the motor 16 at a speed that may be perceived as acceptably high by the user. In this manner, the lower speed operations may allow for longer intervals (e.g., at least about 40 seconds) before a similar reduction in speed is implemented. The software can also implement a cool-down time interval requirement, such that the overall timer is maintained during rapid pulses of the same button (e.g., button 130c). Additionally, the circuitry 27 can also control the operation of a series of indicator lights 132 on the front of the housing 14 that are used to communicate the battery 16 charge status (e.g., in 25% intervals corresponding with each of the four depicted indicator lights 132).

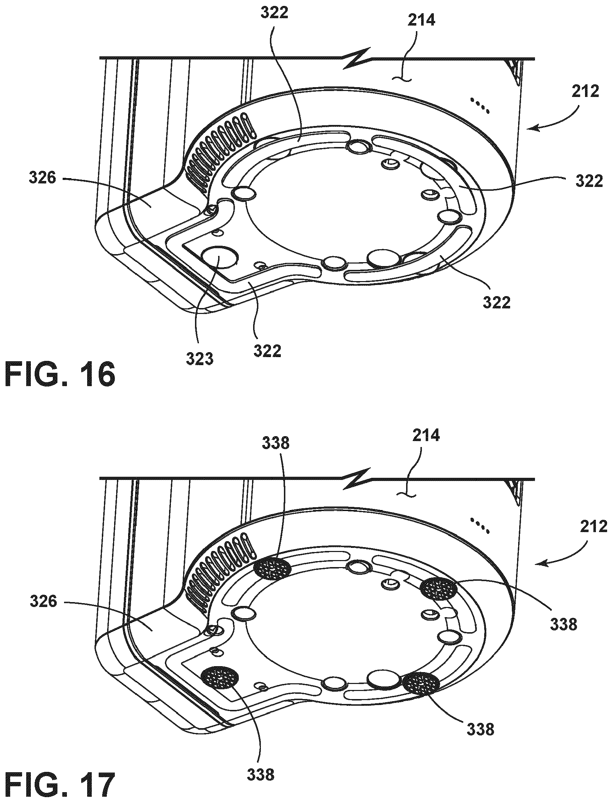

As shown in FIGS. 12-17, an alternative example of the present food processor 210 can be configured as what may be otherwise referred to as a "chopper" and/or a mini-processor, or the like. In this respect, the food processor 210 is generally smaller than the food processor 10 shown in FIGS. 1-11 and discussed above. In some other respects, the food processor 210 may provide simplified operation for quicker, smaller-scale use, such as for chopping or processing smaller quantities of food and/or mixing and blending of dressings, sauces or the like. In general, the food processor 210 may include fewer processing implements 224 than discussed above and, in some applications may only include a blade unit 224, as shown in FIGS. 12-17. Additionally, the lid 270 may lack a chute and/or pusher, as discussed above, in favor of a drizzle opening 334 for the addition of liquids (such as oil or the like when preparing an emulsion). Additionally, the depicted lid 270 may fit over the open end 272 of the jar housing 238 by a bayonet (rather than hinged) connection, with the corresponding interlock member 226 operating by engagement of such bayonet mechanism when the jar assembly 220 is in place on the base unit 212. Still further, the jar assembly 220 may not incorporate a fully-sealed arrangement, as discussed above, with the adapter unit 280 connecting with an elongate drive connection that extends upwardly through a central flange 336 surrounding the lower opening 278 within the lower wall 248 of the jar housing 238. In one aspect, the housing 214 of the bases unit 212 may have a height H2 of about 118 mm between the upper surface 228 and the bottom surface 320 of the housing 214 and a diameter D4 of about 145 mm, which may allow the present food processor 210 to achieve similar stability and balancing characteristics to those discussed above with respect to food processor 10. As shown in FIG. 16, the base unit 212 may include a plurality of annular feet elements 322 that operate to a similar effect as the annular foot pad 122 discussed above, including an extension area 323 that stabilizes the base unit 212 during insertion of the battery 26 therewith. Alternatively, as shown in FIG. 17, the bottom surface 320 may include a plurality of individual feet 338, including one disposed on the underside of the projection 126 that corresponds with the location of the battery-receiving cavity 218.

As is to be appreciated, outside of the differences discussed specifically herein, the structural and operational aspects of the present food processor 210 are generally similar to those discussed above with respect to food processor 10 (with similar elements being indicated in the drawings with similar reference numbers as those used in FIGS. 1-11, increased by 200). In particular, the food processor 210 is configured to operate under the power of the same, or similarly-configured, battery 26 discussed above by receipt in a compatibly-structured battery cavity 218 and using similarly-adapted electronic architecture that operates at an output of, for example 20 V. In this respect, it is noted that the control circuitry 127 may be adapted to work with a smaller motor 216 than that included in the above-described food processor 10 and/or operate at lower speeds according to the needs of such a smaller-scale appliance. Additionally, the jar assembly 220 is configured to use the same drop-in connection, as discussed above, while using three alignment tabs 246 disposed on the interior of the collar 232 (instead of the four alignment tabs 46, discussed above) with corresponding notches 248 defined on a lower flange 248 of the jar housing 238. It is further noted that the jar assembly 220 may similarly include an interlock channel 260 disposed on a back side of the food processor 210 with a separate handle 258 disposed on the front of the food processor 210, in a similar manner to that which is discussed above (with the base unit 212 including a similarly-configured lockout mechanism 258).

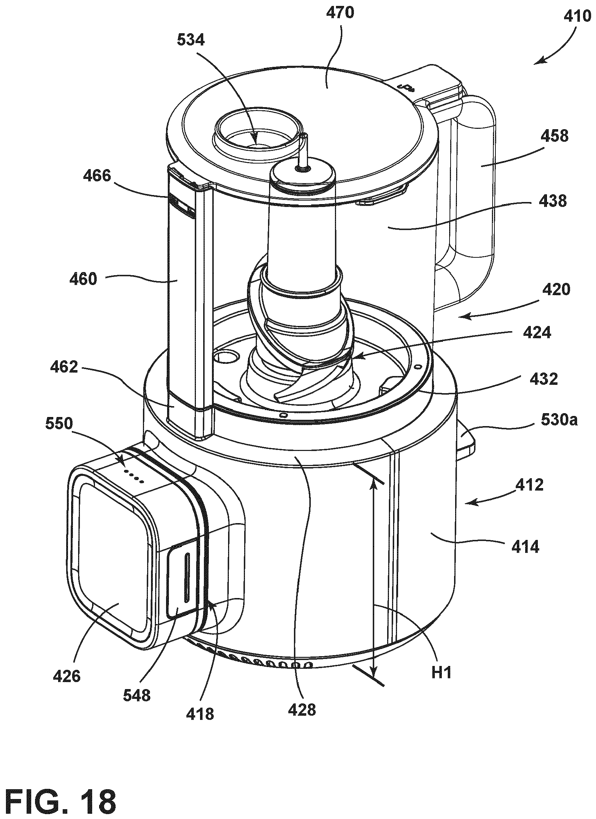

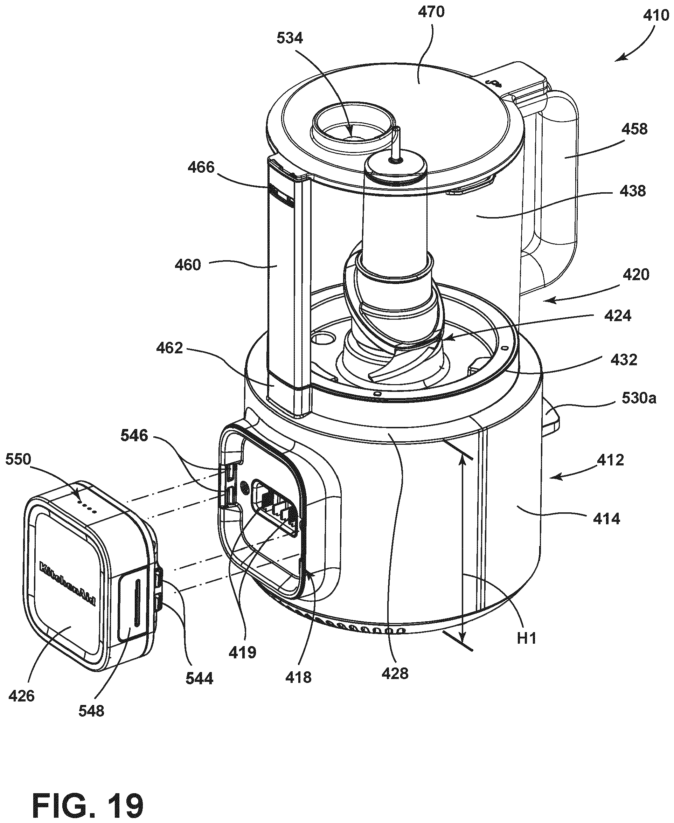

As shown in FIGS. 18-21, a further example a food processor 410, configured as a chopper or mini-processor similar to the food processor 210 discussed above with respect to FIGS. 12-17 can be adapted to operate with a smaller battery 426 than the 20 V example battery 26, 226 also discussed above. As with the other food processor 10, 210 examples discussed above, the food processor 410 includes a base unit 412 including a housing 414 enclosing a drive motor. The housing 414 defines a battery-receiving cavity 418 along a portion thereof with a plurality of terminals 419 (FIG. 19) exposed therein. The food processor 410 further includes a jar assembly 420 mountable on the base unit 412 and enclosing a food-processing cavity 422, a food processing implement 424 rotatably mounted within the jar assembly 420 and configured to be driven by the drive motor when the jar 420 assembly is mounted on the base unit 412, and the battery 426 is mounted in the battery receiving cavity 418 in electrical connection with the plurality of terminals 419. The base unit 412 is configured to operably power the drive motor using the battery 426.

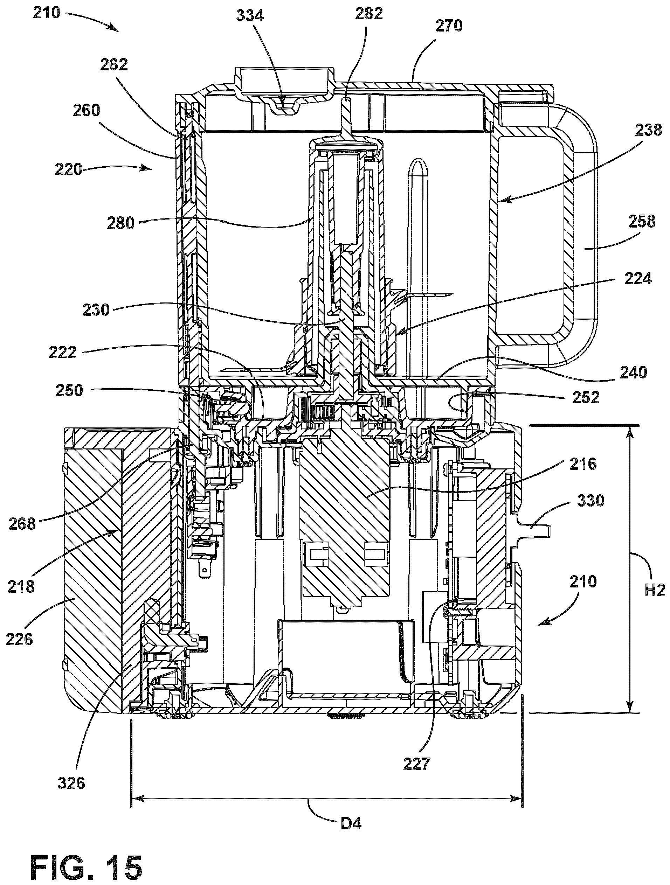

The food processor 410 may provide simplified operation for quicker, smaller-scale use, such as for chopping or processing smaller quantities of food and/or mixing and blending of dressings, sauces or the like, similar to the operation of food processor 210. The food processor may include a blade unit 424 and a drizzle opening 534 for the addition of liquids. Additionally, the depicted lid 470 may fit over the open end 472 of the jar housing 438 by a bayonet connection, with the corresponding interlock member 426 operating by engagement of such bayonet mechanism when the jar assembly 420 is in place on the base unit 412. Still further, the adapter unit 480 can connect with an elongate drive connection that extends upwardly through a central flange (similar to flange 336 in FIG. 15) surrounding the lower opening within the lower wall 448 of the jar housing 438. In one aspect, the housing 414 of the base unit 412 may have a height H2 of about 118 mm between the upper surface 428 and the bottom surface 520 of the housing 414 and a diameter D4 of about 145 mm, which may allow the present food processor 410 to achieve similar stability and balancing characteristics to those discussed above with respect to food processors 10, 210 discussed elsewhere herein. The base unit 412 may include a plurality of individual feet 538.

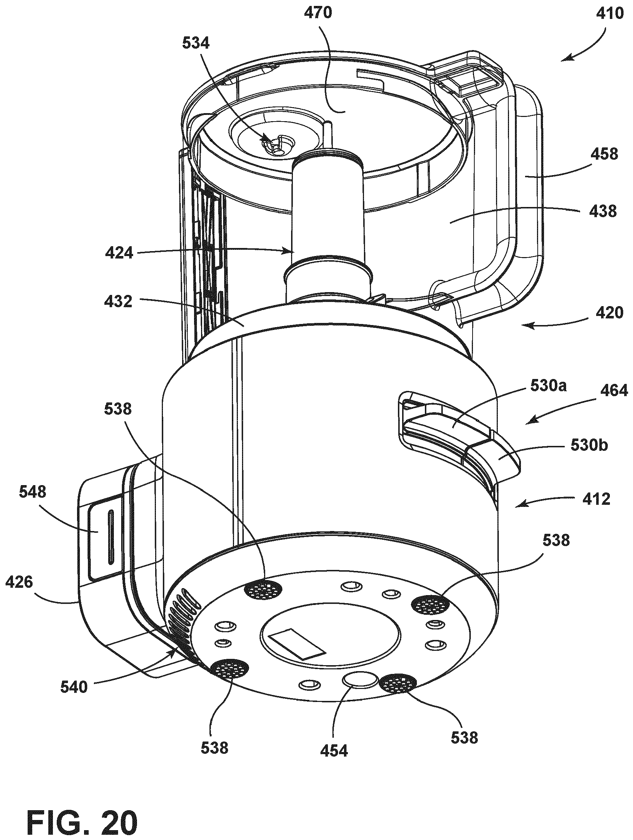

As discussed above, the food processor 410 is configured to operate under the power of a generally smaller battery 426 than the 20V version of the batter 426 discussed above. In this respect, the battery 426 may be smaller in output, such as by being configured for 12V operation. Additionally, because a smaller output battery 426 provides a lower current to the associated device, the battery 426 can also be smaller in size, while still providing the desired duration of power supply and corresponding use of the food processor 410 (or other related appliance). Accordingly, the battery 426 shown in FIGS. 17-20 in connection with food processor 410 is smaller in size than the battery 26 shown in connection with other examples of the food processor 10,210. The battery cavity 418 on the housing 414 of the base unit 412 is, accordingly, smaller than those of the other food processors 10, 210 discussed herein. As shown particularly in FIG. 19, the battery cavity 418 extends through less of the height than those of the food processors 10, 210 configured for use with 20V battery 26. In this manner, the base unit 412 and housing 414 lack the projection 126 that corresponds with the location of the battery-receiving cavity 218 in food processor 210. Rather, the present battery cavity 418 is positioned above the bottom surface 520 of the base unit 412. Specifically, such a projection 126 may be eliminated at least due to the lower weight associated with the smaller battery 426. The open space along the bottom surface 520 on the rear of the base unit 412 can be used for vents 140, as shown in FIG. 20, which can be used to expel heat generated by operation of the food processor 410.

Outside of circuitry and motor modifications that correspond with the 12V architecture, the food processor 410 can use similarly-adapted electronic architecture to the food processors 10, 210, discussed above. In this respect, it is noted that the control circuitry associated with food processor 410 may be adapted to work with a smaller motor than that included in the above-described food processors 10, 210 and/or operate speeds that are appropriate for the needs of such a smaller-scale appliance. As further shown in FIG. 19, the battery 426 is adapted for a snap-fit arrangement with the battery cavity 418, wherein the battery is moved in a lateral direction 542 toward the battery cavity and pressed into engagement therewith. In this arrangement, the terminals 419 of the battery cavity 418 engage with aligned battery terminals for electrical connection with the battery 426 when fully received in the battery cavity 418. As shown, the battery 426 can include spring-loaded tabs 544 that are urged outwardly such that they can be moved inwardly by initial engagement with corresponding notches 546 in the battery cavity 418 before moving outward behind the notches 546 when the battery 426 is fully received in the battery cavity 418 for fixed retention therewith. When the battery 426 is to be removed, buttons 548 associated with the tabs 544 can be depressed to move the tabs 544 inward, thereby releasing them from the notches 546. As further shown, the battery is positioned in an orientation with charge-level indicator lights 550 thereof directed upward for visibility when in use with the food processor 410.

As is to be appreciated, outside of the differences discussed specifically herein, the structural and operational aspects of the present food processor 410 are generally similar to those discussed above with respect to food processor 10 and 210 (with similar elements being indicated in the drawings with similar reference numbers as those used in FIGS. 1-11, increased by 400). In particular, the jar assembly 420 is configured to use the same drop-in connection discussed above (and with the same structural elements) in connection with food processor 210. It is further noted that the jar assembly 420 may similarly include an interlock channel 460 disposed on a back side of the food processor 410 with a separate handle 458 disposed on the front of the food processor 410, in a similar manner to that which is discussed above (with the base unit 412 including a similarly-configured lockout mechanism).

The invention disclosed herein is further summarized in the following paragraphs and is further characterized by combinations of any and all of the various aspects described therein.

According to another aspect of the present disclosure, a food processor includes a base unit including a housing enclosing a drive motor. The housing defines a battery-receiving cavity along a portion thereof with a plurality of terminals exposed therein. The food processor further includes a jar assembly mountable on the base unit and enclosing a food-processing cavity, a food processing implement rotatably mounted within the jar assembly and configured to be driven by the motor when the jar assembly is mounted on the base, and a battery mountable in the battery receiving cavity in electrical connection with the plurality of terminals. The base unit is configured to operably power the drive motor using the battery.

The housing of the base unit defines an upper surface with a drive connection of the base unit mounted on the upper surface and connected with the motor through the housing and a collar extending upwardly from the upper surface and surrounding the drive connection, and the jar assembly is mountable on the base by receipt of a lower edge thereof within the collar.

The collar defines a plurality of alignment tabs extending inwardly toward the drive connection along the upper surface of the housing, the jar assembly includes a jar housing defining the lower edge of the jar assembly, and the jar housing defining a plurality of detents corresponding with respective ones of the plurality of alignment tabs for receipt thereof into the detents when the jar assembly is mounted on the base unit.

The collar defines an exterior having a trim band applied thereon using a hot-foil stamping process.

The jar assembly includes a jar housing having a handle on a first side thereof and an interlock channel defined on a second side of the jar housing opposite the first side of the jar housing.

The jar assembly further includes an interlock member movably mounted in the interlock channel and moveable into engagement with a lockout mechanism in the base and a lid positionable in an open position and a closed position over an open end of the jar housing, the lid operably engaging the interlock member when in the closed position such that the interlock member engages the lockout mechanism when the lid is in the closed position and is disengaged with the lockout mechanism when the lid is in the open position.

The jar assembly includes a jar housing defining a lower surface, a coupling sealingly received in a central opening through the lower surface and engageable with a drive connection of the base unit for rotation of the coupling by rotation of the motor, and a lid coupleable over an open upper side of the jar housing, and the food processing implement is mounted on an adapter unit operably connected with the coupling and including a drive shaft that rotatably engages with the lid.

The food processing implement is a blade unit including a hub mountable on the adapter unit and four blades rigidly coupled with the hub at radially spaced-apart locations therearound, each of the blades defining a base extending along the hub and a sharpened edge having a proximal end positioned within about 10 mm from the base and extending to a distal end along an axis positioned at an angle of about 19° with respect to the base, the sharpened edge extending along a radius between the proximal and distal ends of about 68 mm and defining an arc length of about 67 mm.

The food processing implement is a combination shredding and slicing disc having a hub centrally disposed therein and adapted to couple with the adapter unit and a slicing blade positioned over an opening through the disc, the slicing blade having a sharpened edge with a proximal end positioned within about 3.75 mm of the hub and extending to a distal end along an axis positioned at an angle of about 12° with respect to a radius of the disc extending through the distal end, the sharpened edge extending along a radius between the proximal and distal ends of about 60 mm.

The jar assembly includes a jar housing defining the food-processing cavity and an upper opening, a lid generally enclosing the food-processing cavity and defining a food chute configured for the introduction of food product to the food-processing cavity, a first pusher configured for receipt in the food chute and defining a first tab configured for exerting a first retention force on an interior of the food chute when the first pusher is received in the food chute, the first pusher further defining a secondary chute therethrough and a second tab extending into a portion of the secondary chute, and a second pusher receivable in the secondary chute with the second tab exerting a second retention force on the second pusher.

The housing of the base unit defines a projection extending outwardly from a side wall of the housing, the battery receiving cavity being defined within the projection, and the base unit further defines an annular foot pad coupled on a bottom side of the housing, the annular foot pad defining a tab extending on a lower side of the projection.

It will be understood by one having ordinary skill in the art that construction of the described disclosure and other components is not limited to any specific material. Other exemplary embodiments of the disclosure disclosed herein may be formed from a wide variety of materials, unless described otherwise herein.

For purposes of this disclosure, the term "coupled" (in all of its forms, couple, coupling, coupled, etc.) generally means the joining of two components (electrical or mechanical) directly or indirectly to one another. Such joining may be stationary in nature or movable in nature. Such joining may be achieved with the two components (electrical or mechanical) and any additional intermediate members being integrally formed as a single unitary body with one another or with the two components. Such joining may be permanent in nature or may be removable or releasable in nature unless otherwise stated.

It is also important to note that the construction and arrangement of the elements of the disclosure as shown in the exemplary embodiments is illustrative only. Although only a few embodiments of the present innovations have been described in detail in this disclosure, those skilled in the art who review this disclosure will readily appreciate that many modifications are possible (e.g., variations in sizes, dimensions, structures, shapes and proportions of the various elements, values of parameters, mounting arrangements, use of materials, colors, orientations, etc.) without materially departing from the novel teachings and advantages of the subject matter recited. For example, elements shown as integrally formed may be constructed of multiple parts or elements shown as multiple parts may be integrally formed, the operation of the interfaces may be reversed or otherwise varied, the length or width of the structures and/or members or connector or other elements of the system may be varied, the nature or number of adjustment positions provided between the elements may be varied. It should be noted that the elements and/or assemblies of the system may be constructed from any of a wide variety of materials that provide sufficient strength or durability, in any of a wide variety of colors, textures, and combinations. Accordingly, all such modifications are intended to be included within the scope of the present innovations. Other substitutions, modifications, changes, and omissions may be made in the design, operating conditions, and arrangement of the desired and other exemplary embodiments without departing from the spirit of the present innovations.

It will be understood that any described processes or steps within described processes may be combined with other disclosed processes or steps to form structures within the scope of the present disclosure. The exemplary structures and processes disclosed herein are for illustrative purposes and are not to be construed as limiting.

## Claims

1. A food processor (10), comprising:
a base unit (12) including a housing (14) enclosing a drive motor (16), the housing (14) defining a battery receiving cavity (18) along a portion thereof with a plurality of terminals (19) exposed therein;
a jar assembly (20) mountable on the base unit (12) and enclosing a food-processing cavity (22) ;
a food processing implement (24) rotatably mounted within the jar assembly (20) and configured to be driven by the motor (16) when the jar assembly (20) is mounted on the base (12); and
a battery (26) mountable in the battery receiving cavity (18) in electrical connection with the plurality of terminals (19), wherein the base unit (12) is configured to operably power the drive motor (16) using the battery (26).

2. The food processor (10) of claim 1, wherein the housing (14) of the base unit (12) defines:
an upper surface (28) with a drive connection of the base unit (12) mounted on the upper surface (28) and connected with the motor (16) through the housing (14); and
a collar (32) extending upwardly from the upper surface (28) and surrounding the drive connection (30), wherein the jar assembly (20) is mountable on the base (12) by receipt of a lower edge (36) thereof within the collar (32).

3. The food processor (10) of claim 2, wherein the collar (32) defines a plurality of alignment tabs (46) extending inwardly toward the drive connection (30) along the upper surface (28) of the housing (14).

4. The food processor (10) of claim 3, wherein the jar assembly (20) includes a jar housing (38) defining the lower edge (36) of the jar assembly (20), the jar housing (38) defining a plurality of detents corresponding with respective ones of the plurality of alignment tabs (46) for receipt thereof into the detents when the jar assembly (20) is mounted on the base unit (12).

5. The food processor (10) of any one of claims 2 to 4, wherein the collar (32) defines an exterior having a trim band (56) applied thereon using a hot-foil stamping process.

6. The food processor (10) of any one of the preceding claims, wherein the jar assembly (20) includes:
a jar housing (38) having a handle (58) on a first side thereof; and
an interlock channel (60) defined on a second side of the jar housing (38) opposite the first side of the jar housing (38).

7. The food processor (10) of claim 6, wherein the jar assembly (20) further includes an interlock member (66) movably mounted in the interlock channel (60) and moveable into engagement with a lockout mechanism (68) in the base (12).

8. The food processor (10) of claim 7, wherein the jar assembly (20) further includes a lid (70) positionable in an open position and a closed position over an open end of the jar housing (38), the lid operably engaging the interlock member (66) when in the closed position such that the interlock member (66) engages the lockout mechanism (68) when the lid (70) is in the closed position and is disengaged with the lockout mechanism (68) when the lid (70) is in the open position.

9. The food processor (10) of claim 8, wherein the lid (70) is moveable into and out of the closed position by rotation of the lid (70) within an open end of a body (96) of the jar assembly (20).

10. The food processor (10) of any one of claims 7 to 9, wherein the base (12) defines a front side having a user interface (64) thereon and a back side on which the battery receiving cavity (18) is defined.

11. The food processor (10) of claim 10, wherein the lockout mechanism (68) is positioned on the back side of the base (12) such that a use position of the jar assembly (20) relative to the base (12) is defined with the interlock channel (60) aligned with the lockout mechanism (68) and the handle (58) oriented toward the front of the base (12).

12. The food processor (10) of either claim 10 or claim 11, wherein the user interface (64) includes a set of battery charge indicator lights (132).

13. The food processor (10) of any one of the preceding claims, wherein the battery-receiving cavity (18) is configured for receiving the battery (26) in a releasably-retaining arrangement by movement of the battery (26) into the battery receiving cavity (18) in a radial direction with respect to the base unit (12).

14. The food processor (10) of any one of the preceding claims, wherein the housing (14) of the base unit (12) defines a projection (126) extending outwardly from a side wall (44) of the housing (14), the battery receiving cavity (18) being defined within the projection (126).

15. The food processor (10) of claim 14, wherein the base unit (12) further defines an annular foot pad (122) coupled on a bottom side (120) of the housing (14), the annular foot pad (122) defining a tab (123) extending on a lower side of the projection (126).
